# EUROPEAN PATENT APPLICATION

(11) **EP 1 158 458 A2**
(43) Date of publication of application: **28.11.2001**
(21) Application number: 01100554.3
(22) Date of filing: 10.01.2001
(51) Int. Cl.: G06K 19/077

(54) **Pc card having an antenna unit**

(30) Priority: 22.05.2000 JP 2000150649
(71) Applicant: HONDA TSUSHIN KOGYO Co., Ltd., Meguro-ku, Tokyo (JP)
(72) Inventor: Hirai, Yuji, c/o Honda Tsushin Kogyo Co.Ltd, Tokyo (JP); Sato, Kiyoshi, c/o Honda Tsushin Kogyo Co.Ltd, Tokyo (JP); Homma, Kazuhiro, Honda Tsushin Kogyo Co.Ltd, Tokyo (JP); Aizawa, Hidenori, Honda Tsushin Kogyo Co.Ltd, Tokyo (JP); Komiya, Koji, Meguro-ku Tokyo (JP)
(74) Representative: Lorenz, Werner

(57) **Abstract**

To offer a small and thin PC card having an antenna unit, an antenna unit storage part 22c is provided on a thin board or plate-like main body 2 1 which most part of the top and bottom is covered by the radio wave shield material 10, 12. The extendible antenna unit 3 is inserted in this storage part of the antenna unit. In time of using, at least the antenna part 32a of the antenna unit 3 is expanded outside of the radio wave shield material of the main body 2 and retained in the expanded position to receive and send the radio wave. In time of not using, the antenna unit 3 is stored and retained in the stored position where the substantially entire antenna unit 3 is stored in the main body 2.

## Description

### Field of The Invention

The invention relates to a PC card having an antenna unit, in particular to a PC card for achieving compactness and thinness.

### Related Art

In the office, in constructing the wireless LAN, an access point device to receive and send data is set on the server side of the LAN. On the other hand, a PC card having an antenna unit is inserted to a PC card slot of a computer, and by corresponding between the two devices, the data is received and send. Moreover, PHS card has a similar usage and the principle of the invention includes this usage.

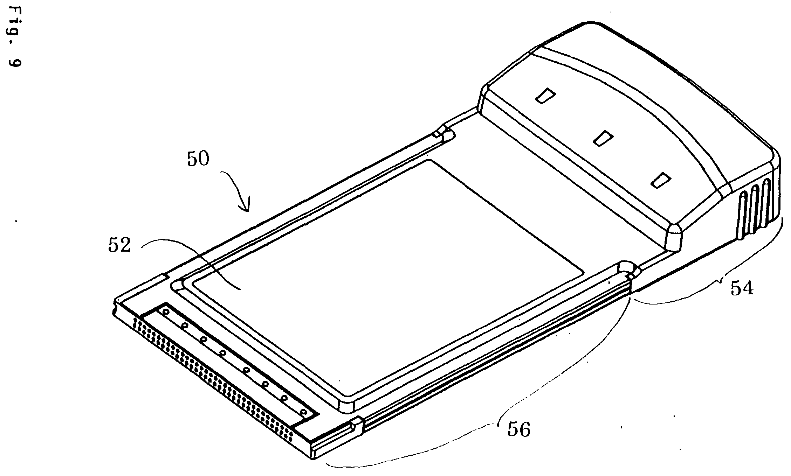

The Figure 9 is a perspective view of a typical conventional PC card having an antenna portion. As shown in the drawing, the conventional PC card having an antenna portion 50 is manufactured covered both sides with a metallic shield cover 52 to protect a substrate inside the card and also to shield electronic devices such as semiconductors equipped with the substrate from outside electromagnetic waves. On the other hand, an antenna of an antenna portion 54, which receives and sends the radio wave, is not able to do so (receives and sends the radio wave) when located in the position where it is covered by the metallic shield. For this reason, the antenna portion 54 is build in a way to stick out of an end of a thin-boarded main body of a PC card 56. Because the size and the thickness of the PC card slot of the computer is determined according to the standard, the antenna portion 54 having large thickness had to be equipped in this way. This conventional antenna portion 54 comprises a connector part and an antenna part (both are not shown in the drawing) to connect electrically with a main body of the PC card.

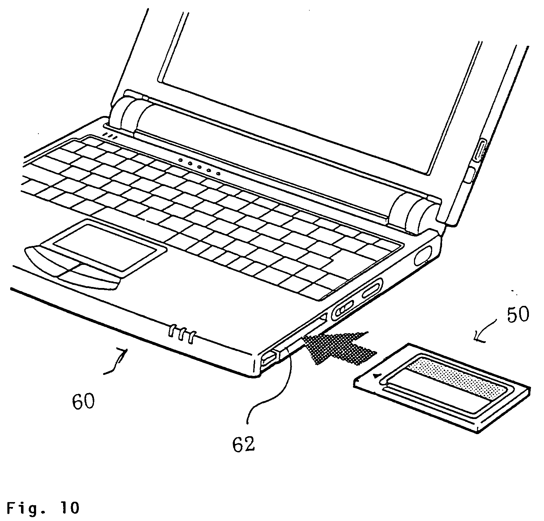

Recently, due to the spread of a note-type personal computer, as illustrated in the Figure 10, the note-type personal computer is being frequently used in the wireless LAN equipping the PC card. For the note-type personal computer, a number of the PC card slot is limited since a plurality of functions are equipped in compact with the main body of the personal computer (usually 1~2 card slots). It is therefore, in using several PC cards, a wireless LAN PC card, that is a PC card having an antenna portion, has to be detached from the slot and kept outside of the computer. Usually those note-type personal computers are kept inside a carrier bag designed especially for this type of computer, all accessories relating to the computer and parts should be stored and kept in pockets of this carrier bag. Because the carrier bag is designed with compact pockets like the personal computer itself, the PC card that is expected to be stored in this pocket is required to be small than ever before. There has been also a problem in the protection of the antenna portion from damage and other problems because it is sticking out of the card.

It is therefore an object of the present invention to solve the problems of the aforesaid conventional PC card for the wireless LAN or the PC card having the antenna portion, and to provide a PC card having an antenna unit which achieves compactness in size and thinness in height.

### Description of the Invention

The present invention is to solve those problems and to provide a PC card having an antenna unit wherein the most of the top and bottom parts of a thin plate-like or board-like main body of the card is covered by the radio wave shield material, a stored portion of the antenna unit is build in the main body; in this stored portion of the antenna unit, the PC card having the antenna unit that is possible to expand therefrom is equipped, and in time of using the computer, at least the antenna part of the antenna unit is expanded to outside of the radio wave shield material of the main body of the card, and the antenna unit is retained at an expanded position to receive and send the radio wave, and in time of not using, the entire antenna unit is substantially stored inside the main body of the card and retained at a stored position.

The main body of the card and the antenna unit are manufactured as separate parts, and the antenna unit is assembled and kept in the storage part of the main body of the card. The antenna unit is designed to be retained in at least 2 positions relating to the main body of the card. The first position is the expanded position where, during on-operation, at least the antenna part of the antenna unit is expanded to outside of the radio wave shield material of the main body of the card and is possible to receive and send the radio wave between an access point device of the server.

The second position is the stored position where, during off-operation, the entire antenna unit is substantially stored inside the main body of the card. After the PC card having an antenna unit in accordance with the present invention is detached from the computer, the antenna unit is stored inside the card whereby the size of the entire card is minimized by the size of the antenna unit. As a result, the card substantially becomes a thin flat board like card without any projection and several cards are kept without taking much space. For the entire antenna unit is substantially stored inside the metallic material card, it is protected from the radio wave and damages.

The invention according to the claim 2 is characterized in that said PC card having the antenna unit defineded in the claim 1 is provided with a retainer mechanism between the main body of the PC card and the antenna unit whereby the antenna unit is kept from expanding further than the expanded position where it might be dropped off.

The antenna unit is retained and stopped in said 2 positions of the main body of the card as mentioned above, the antenna unit is designed not to fall out from the main body of the PC card, expanding further than the expanded position. However, as a device to move the antenna unit to the expanded position, the spring has been used generally and sometimes the spring force is too much. In this case happens, to avoid the antenna unit to fall out from the PC card, the retainer mechanism retains it and stops it from moving more to outside. This retainer mechanism can be used as an engaging mechanism at the expanded position.

The invention according to the claim 3 is characterized in that, in said PC card having the antenna unit claimed in the claim 2, said retainer mechanism comprises a combination of a projection build either on the main body of the card or the antenna unit and an elastic bridge part which is formed as a part of the other frame structure, and is provided with a protrusion entering into an extended line of a passage where said projection passes through.

The projection built either on the main body of the card or the antenna unit, preferably on the main body of the PC card is moving linearly back and force to the other. On the extended line of this passage, said protrusion is formed with the bridge part so as to obstruct the movement thereof. Generally, as this kind of the engaging mechanism or a stopper in the electric device, if the material is made of plastic, an elastic leg of a cantilever construction engages with the protrusion. However the structure of this elastic leg had a drawback wherein it breaks easily due to the enormous moment load on the root of the leg. The bridge part which is formed as a part of the frame structure can have enough elasticity and support the load on both ends of the bridge so there is no need to worry about breaking.

The invention according to the claim 4 is characterized in that, in said PC card having the antenna unit claimed in any one of the claim 1-3, the main body of the PC card and the antenna unit is electrically connected by a flexible cable.

In the PC card having the antenna unit of the present invention, the main body of the PC card and the antenna unit are manufactured as separate parts, but by means of this flexible cable, they are connected electrically.

The invention according to the claim 5 is characterized in that, in said PC card having the antenna unit claimed in any one of the claims 1-3, the main body of the PC card and the antenna unit are electrically connected by a mechanical connecting pressure created by elastic connectors, which are projecting from a substrate, and the conductor pads which are equipped in an other substrate. When the antenna unit is in the expanded position, the main body of the PC card and the antenna unit are electrically connected, and when the antenna unit is moved to the stored position, the connection is cut off.

When the antenna unit is in the expanded position, that is, only in an operation mode or only when the PC card having the antenna unit is being used, the antenna unit and the main body are electrically connected. For example, in the case of carrying the note-type personal computer while the PC card is still inserted in the slot, the antenna unit is stored in the main body without receiving radio wave and accidentally operating.

The invention according to the claim 6 is characterized in that, in said PC card having the antenna unit claimed in the claim 5, said main body is provided with a reinforcement structure when the antenna unit is in the expanded position. This reinforcement structure is constructed to assure the connection between the elastic connectors of one substrate and the conductor pads in the other substrate.

As a result of this reinforcement structure, when the antenna unit is in the expanded position, the connection between the elastic conductors of one substrate and conductor pads of the other substrate is assured. It avoids the defect in receiving and sending the data due to the poor connection.

The invention according to the claim 7 is characterized in that, in said PC card having the antenna unit claimed in the claim 1, both the face and the back of the main body of the PC card on storage part side are a bit dented inside.

It makes possible to push further (inside) from the condition where the antenna unit is completely stored in the storage part of the PC card and, as a trigger, the antenna unit will jump out from the stored position.

The invention is possible to obtain further advantageous changes and refinements in the scope of the claims without deviating from the spirit of invention. The present invention includes these changes and refinements.

Preferable usage of the PC card having the antenna unit is described more specifically with the aid of the drawings below.

### Brief Explanation of the drawings

Figure 1 is a perspective view of one embodiment of a PC card having an antenna unit; (a) is a diagram of the antenna unit in the expanded position in time of using, and (b) is a diagram of the antenna unit in the stored position in time of not using.

Figure 2 is an exploded perspective view of a PC card having an antenna unit.

Figure 3 is a perspective view illustrating the frame shown in Figure 2.

Figure 4 (a) and (b) are plan views showing the spring 26 in the antenna unit 3 being in the usage (expanded position) and showing the spring being in the non-usage (stored position).

Figure 5 is a perspective view in the upside down condition of the top cover illustrated in the Figure 2.

Figure 6 (a) and (b) are perspective views looking down on and up on the structure of connecting elastically the substrate of the main body of the PC card and the substrate of the antenna unit.

Figure 7 is a perspective view showing the details of the substrate 32 shown in the Figure2.

Figure 8 is an expanded perspective view of the top cover 30 looking from the opposite direction of the Figure 2.

Figure 9 is a perspective view of the typical type of the conventional PC card having an antenna portion.

Figure 10 is a perspective view for explaining the condition of inserting the PC card into the note type computer.

### The Best Mode of the Invention

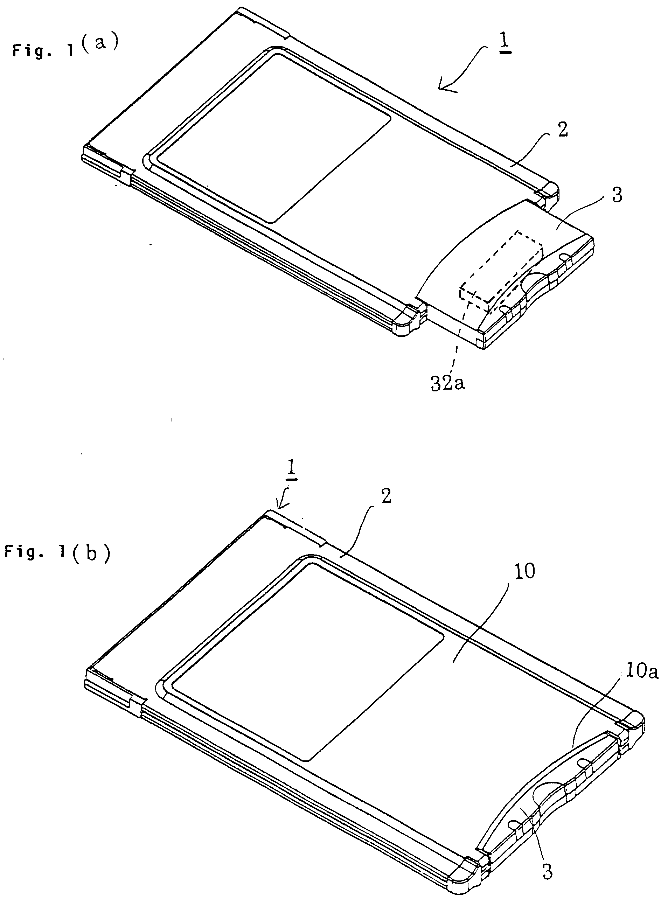

Figure 1 is a perspective view of one embodiment of the PC card having an antenna according to the present invention; (a) shows the antenna unit in the expanded position when the PC card is being used, and (b) shows the antenna unit in the stored position when the card is not being used.

The PC card 1 having the antenna unit comprises the main body 2 and the antenna unit 3. They are manufactured as separate parts and the antenna unit 3 is mounted within the main body 2 to take two positions, the expanded position and the stored position. As illustrated in Figure 1 (a), when the PC card is being used, at least the antenna part 32a of the antenna unit 3 is expanded outside of the metallic shield material of the main body 2 and retained there. On the other hand, as illustrated in the Figure 1 (b), when the card is not being used, the entire antenna unit 3 is substantially stored inside the main body 2 and retained there. When the antenna unit 3 is pressed down deep inside of the PC card 1 from the condition of the Figure 1 (b), the engaging mechanism is lifted, the antenna unit 3 is pushed out from the condition illustrated in the Figure 1 (b) to the condition illustrated in Figure (a) by the force of the spring and is retained.

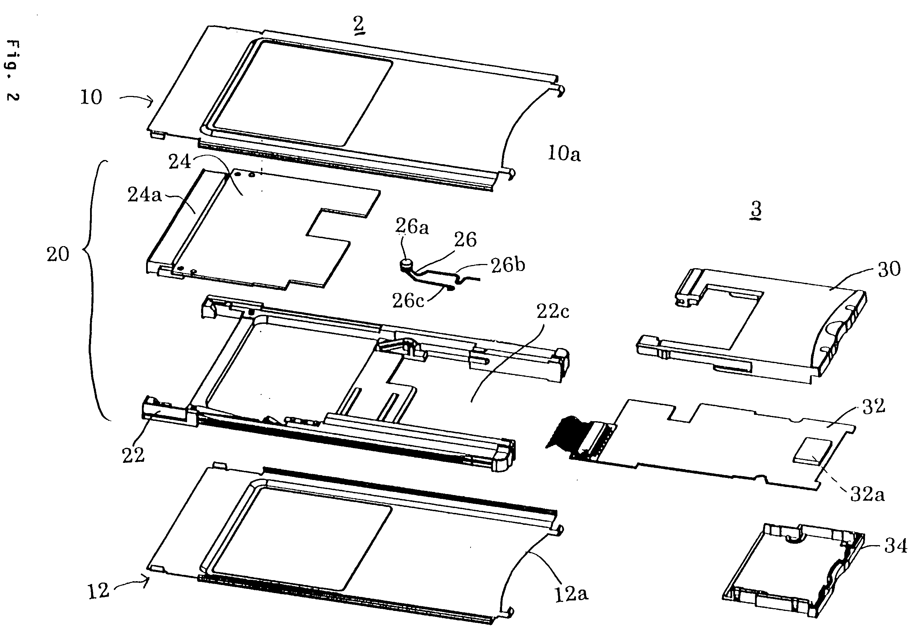

Figure 2 is an exploded perspective view of main parts of the PC card 1 illustrated in the Figure 1.

According to the illustration of the Figure 2, the main body 2 in roughly speaking comprises a metallic upper cover 10 and a metallic lower cover 12, and the core part 20 which is being sandwiched by the covers 10, 12. Antenna unit storage part sides of the upper cover 10 and the lower cover 12 are dented inside so that arc portions 10a and 12a are formed. By those dents, the antenna unit 3 is possible to be pressed down further inside from the condition where the antenna unit 3 is completely stored in an antenna unit storage part 22c of the PC card 1, illustrated in Figure 1(a). And as a trigger, the antenna unit 3 jumps out from the stored position to the expanded position.

The core part 20 includes a plastic frame 22 formed as an integrated structure, and a substrate 24 fixed to the frame 22, and a spring 26. On the other hand, the antenna unit 3 comprises a plastic upper plate 30 and a lower plate 34, and a substrate 32 having an antenna part 32a thereon which is being sandwiched by those plates 30, 34.

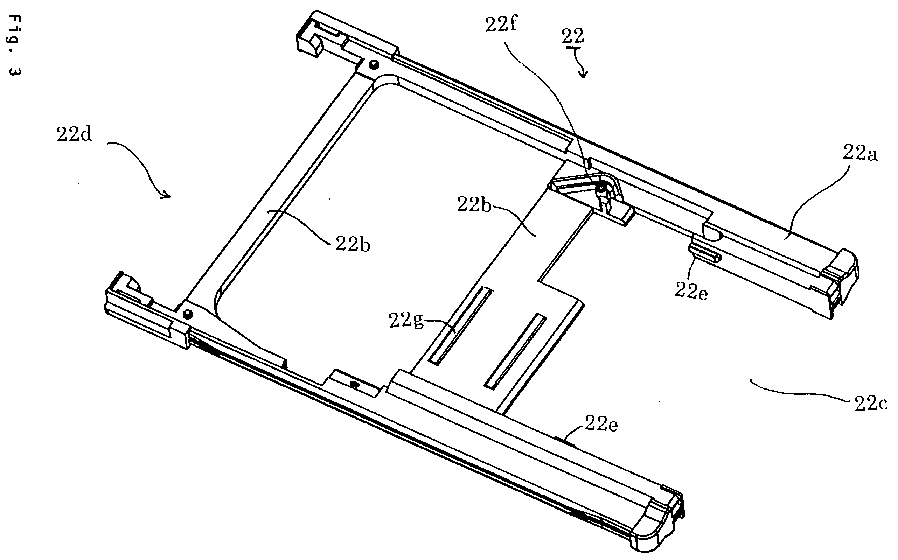

As illustrated specifically in the Figure 3, the frame 22 includes a pair of side frame parts 22a, which are located in the distance almost the same as the width of the PC card 1, and the bridge parts 22b which connect strongly to the side frame parts 22a, 22a at almost in the middle and at a position near the end of the connector side. The bridge part 22b at the middle is a thin plate or board-like shape, and there are 2 rays of bank parts 22g thereon. It is shaped in a thin board to provide a space for elastic connectors 33a, which are fixed on the substrate 32 of the antenna unit 3, to move back and force. By means of this structure, the bridge part 22b at the middle performs as the reinforcement structure to assure the electrical connection between the main body 2 and the antenna unit 3 when it is in expanded position as mentioned later.

The open space or the antenna unit storage part 22c, formed by a pair of the side frame parts 22a, 22a and the bridge part 22b at the middle, is used to store the antenna unit 3. By doing so, the thinness of the main body 2 is acheaved. On the other hand, the open space 22d, formed by a pair of the side frame parts 22a, 22a and the connector side bridge 22b, is used to store connectors 24b, which are fixed on the end part of the substrate 24. As illustrated specifically in the Figure 3, on a side that faces the open space 22c of the side frame part 22a, there is a projection 22e. As mentioned later, this projection 22e serves as the guide when the antenna unit 3 is being stored in very deep inside the main body 2.

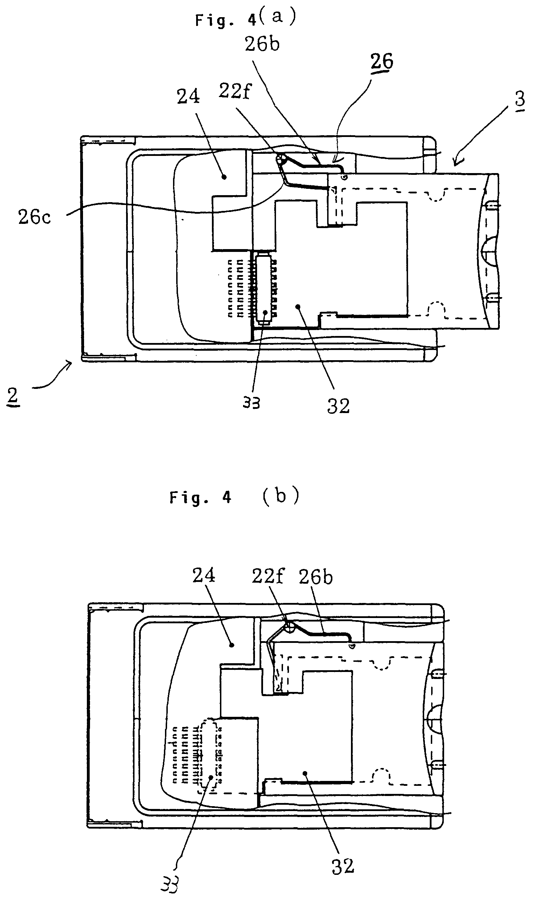

A spring 26 is attached to a post 22f of the side frame part 22a. Spiral part 26a of the spring 26 is inserted to the post 22f and its extending side legs 26b, 26c are possible to slide along two adjacent sides of the antenna unit 3. Figure 4 (a) and (b) illustrates the conditions of the spring 26 when the antenna unit 3 is being used (the expanded position ) and not being used ( the stored position).

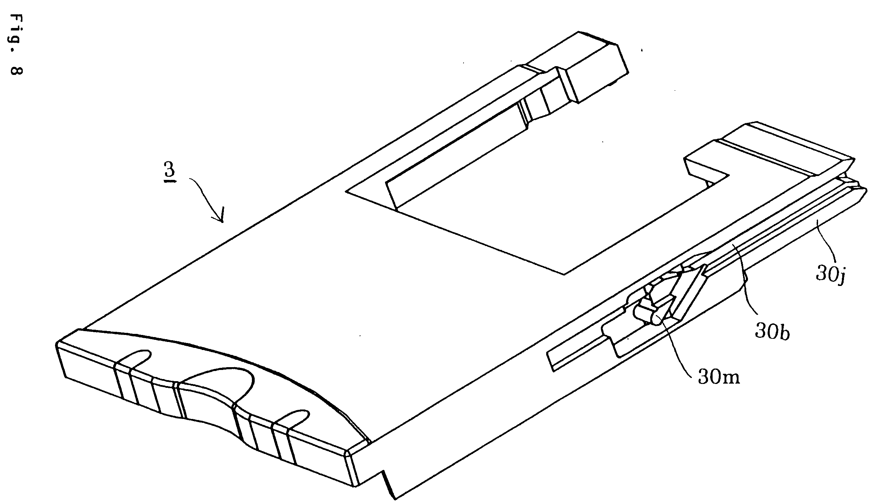

The Figure 8 is an enlarged perspective view of the opposite side of the plastic upper plate 30, illustrated in the Figure 2. As illustrated, on the other side wall 30j of the plastic upper plate 30, from the side of the main body 2 to inside, there is a spring guide groove 30k, and at the end of it, there is depression 30m. The end part of the extending side leg 26b of the spring 26 falls into this depression 30m, the antenna unit 3 is retained in the stored position relating to the main body 2. When the antenna unit 3 is pressed little bit to inside from this position, the end of the extending side leg 26b of the spring 26 is lifted and then goes deep inside of the spring guide groove 30k from this depression 30m. Upon releasing the finger, the antenna unit 3 is ejected outside of the main body 2 by the elasticity of the spring 26.

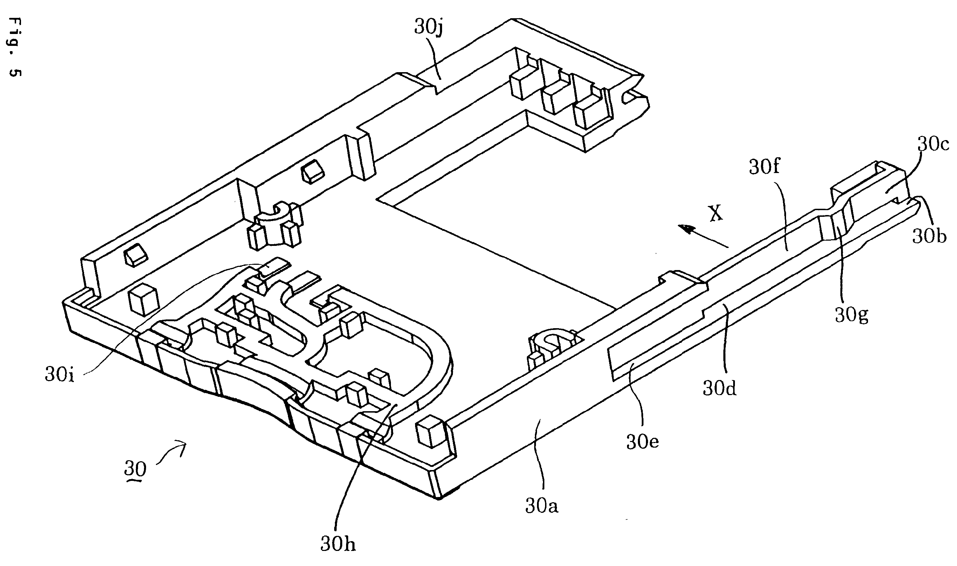

Next, the description of the engaging mechanism constructed between the main body 2 and the antenna unit 3. Figure 5 is a perspective view of the plastic upper plate 30 placed upside down. As illustrated in the Figure 5, a side wall 30a is formed along one side of the plastic upper plate 30. The side wall 30a is extended to the direction of the main body 2, and its bottom part 30b and elevation part 30c are placed to form a letter T. The elevation part 30c includes an open space 30d by missing material of the connection to the bottom part 30b. The elevation part 30c adjacent to the open space 30d is the bridge part 30f which is supported by its both ends, is capable of bending elastically in the direction of center (the direction of the arrow X) of the plastic upper plate 30. The bridge part 30f also has the protrusion part 30g which protrudes in the direction outside of the side of the plastic upper plate 30.

The projection 22e of the main body 2, mentioned before, is built to move back and force along the guide groove 30e which is formed on the side wall 30a. On the extended line, there is the protrusion part 30g. The projection 22e is therefore engaged with the protrusion part 30g, preventing the antenna unit from extending over the expanded position and falling out from the main body 2. The bridge part 30f is in the form of bridge in which both ends are supported so it does not damage from the moment force.

Moreover, in the drawing, reference number 30h is the lens through which light of LED 30i penetrates to outside and informs the user of various conditions of PC card 1.

As mentioned above, the main body 2 and the antenna unit 3 are manufactured as separate parts. To connect those parts electrically, the substrate 24 of the main body 2 and the substrate 32 of the antenna unit 3 are connected by the flexible cable (not illustrated). It is the most general and requires minimum cost to achieve the purpose.

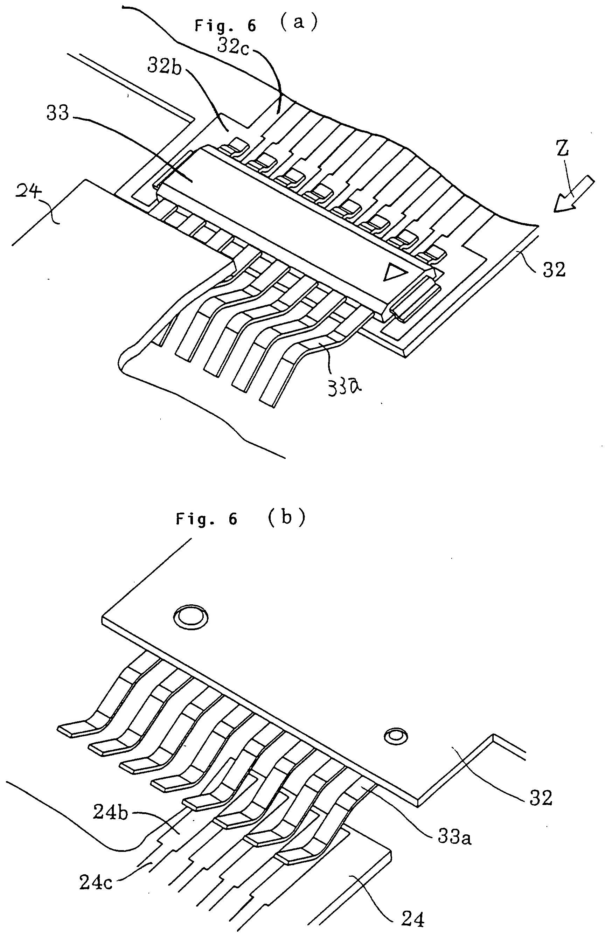

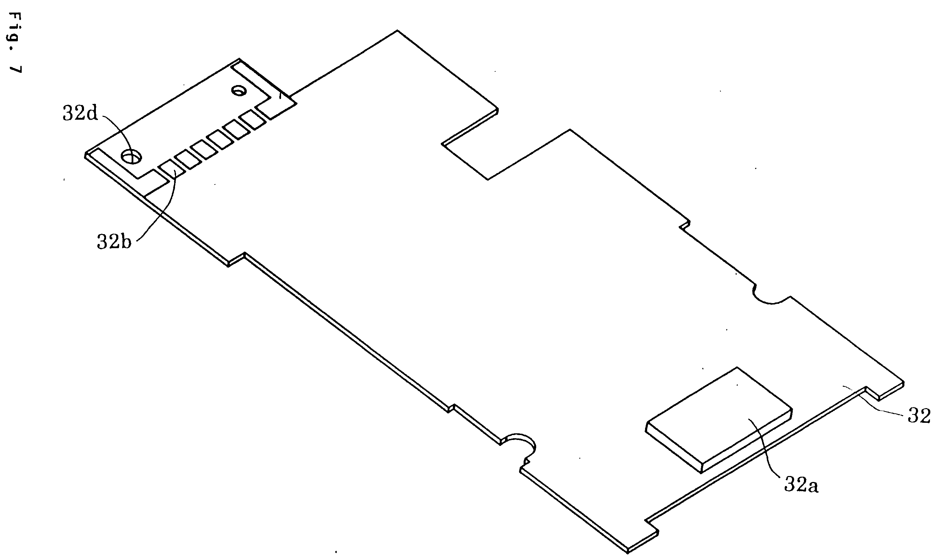

Figure 6 is a perspective view showing an another embodiment of construction for connecting the substrate of the main body of the PC card and the substrate of the antenna unit. For the substrate 24 of the main body 2 and the substrate 32 of the antenna unit 3, there are provided with the conductive pads 24b and 32b on the ends of the wired conductive lines 24c and 32c. A plurality of elastic connectors 33a are molded into a connector 33, and the connector 33 is fixed to the substrate 32 by using setting holes 32d (Figure 7). As a result, one end of each elastic connector 33a attaches to the conducting pad 32b of the substrate 32 and electrically conducted. Alternatively, one end of each elastic connector 33a and the conducting pad 32b of the substrate 32 are soldered. When the antenna unit 3, therefore, the substrate 32 moves in the direction of the arrow Z to the position shown in the Figure 6, or when the PC card 1 is being used, one end of each elastic connector 33a comes into contact with the conducting pad 24b of the substrate 24 and electrically conducted. At this time, the bank parts 22g on the bridge part 22b at the middle supports the substrate 32. In the consequence of this, the curving of the substrate 32 diminishes and assures the electrical connection to the conductive pad 24b of the substrate 24.

On the other hand, when the antenna unit 3, therefore, the substrate 32 moves in the opposite direction of the arrow Z, one ends of the elastic connectors 33a come off from the positions of the conductive pads 24b of the substrate 24 and the electric connection goes off.

As mentioned above, when the antenna unit 3 is in the expanded position, the main body 2 and the antenna unit 3 are electrically connected, but when this antenna unit 3 moves to the stored position, the connection goes off. Therefore, when carrying the note type computer with a PC card inserted in the PC card slot and the antenna unit 3 is stored inside the main body 2, the wrong operation of catching the radio wave is avoided.

With the invention according to the claim 1, inside the thin and plate-like main body of the PC card, almost all of the top and bottom sides of which are covered with the radio wave shielding material, there is provided with the antenna unit storage part or slot into which the antenna unit is expandably mounted. In time of using, at least the antenna part of the antenna unit is expanded to outside of the radio wave shielding material and retained and is able to receive and send the radio wave. In time of not using, the entire antenna unit is substantially stored and retained in the stored position, and is able to achieve the minimization in size and thinness in height. A PC card substantially becomes a thin plate or board without any projection, result in being easy to keep PC cards on top of each other without taking much space.

With the invention according to the claim 2 wherein the PC card having the antenna unit defined in the claim 1 includes the retainer mechanism between the main body of the PC card and the antenna unit, the antenna unit is prevented from falling out of the main body of the PC card extending over the expanded position.

With the invention according to the claim 3 wherein the retainer mechanism of the PC card having the antenna unit defined in the claim 2, comprises the combination of the projection which is build either on the main body of the PC card or the antenna unit, and the elastic bridge part which is formed as a part of the other frame structure and is provided with a protrusion entering into the extended line of the passage where the projection passes through, the bridge has enough elasticity and at a same time, has advantage of not breaking in supporting load because it is supported by both ends of the bridge.

With the invention according to the claim 4 wherein the PC card having the antenna unit defined in any of the claims 1~3 includes the main body of the PC card and the antenna unit that are electrically connected by the flexible cable, electrical connection can be easily obtained with little cost.

With the invention according to the claim 5 wherein the PC card having the antenna unit defined in any of the claims 1~3 includes the main body of the PC card and the antenna unit that are electrically connected by the pressure of the elastic connectors which are set sticking out from the one substrate and the conductive pads which are formed on the other substrate, they are electrically connected when the antenna unit is in the expanded position while the connection is cut off when it moves to the stored position.

With the invention according to the claim 6 wherein the PC card having the antenna unit defined in the claim 5 includes the reinforcement structure to assure the connection between the elastic connectors of one substrate and the conductive pads of the other substrate when the antenna unit is in the expanded position, a defect in receiving and sending data due to the poor connection is advantageously omitted.

With the invention according to the claim 7 wherein the PC card having the antenna unit defined in the claim 1 includes the insidely dented portions on both the face and back of the main body of the PC card on storage part side, it is capable of pushing further ( inside) from the condition where the antenna unit is completely stored in the antenna unit storage part or slot.

## Claims

1. A PC card having an antenna unit wherein the most of the top and bottom parts of a thin plate-like or board-like main body of the card is covered by the radio wave shield material, a stored portion of the antenna unit is build in the main body; in this stored portion of the antenna unit, the PC card having the antenna unit that is possible to expand therefrom is equipped, and in time of using the computer, at least the antenna part of the antenna unit is expanded to outside of the radio wave shield material of the main body of the card, and the antenna unit is retained at an expanded position to receive and send the radio wave, and in time of not using, the entire antenna unit is substantially stored inside the main body of the card and retained at a stored position.

2. A PC card having an antenna unit as claimed in the claim 1 wherein a retainer mechanism between the main body of the PC card and the antenna unit is provided whereby the antenna unit is kept from expanding further than the expanded position where it might be dropped off.

3. A PC card having an antenna unit as claimed in the claim 2 wherein said retainer mechanism comprises a combination of a projection build either on the main body of the card or the antenna unit and an elastic bridge part which is formed as a part of the other frame structure, and is provided with a protrusion entering into an extended line of a passage where said projection passes through.

4. A PC card having an antenna unit as claimed in any one of the claim 1~3 wherein the main body of the PC card and the antenna unit is electrically connected by a flexible cable.

5. A PC card having an antenna unit as claimed in any one of the claims 1~3 wherein the main body of the PC card and the antenna unit are electrically connected by a mechanical connecting pressure created by elastic connectors, which are projecting from a substrate, and the conductor pads which are equipped in an other substrate.

6. A PC card having an antenna unit as claimed in the claim 5 wherein said main body is provided with a reinforcement structure when the antenna unit is in the expanded position.

7. A PC card having an antenna unit as claimed in the claim 1 wherein both the face and the back of the main body of the PC card on storage part side are a bit dented inside.
